## Europäisches Patentamt
## European Patent Office
## Office européen des brevets

(11) Veröffentlichungsnummer: **0 120 198**
A1

(12) # EUROPÄISCHE PATENTANMELDUNG

(21) Anmeldenummer: **84100475.7**

(22) Anmeldetag: **18.01.84**

(51) Int. Cl.³: **B 25 J 13/00**
**B 25 J 9/00**

(30) Priorität: 26.02.83 DE 3306877

(43) Veröffentlichungstag der Anmeldung:
03.10.84 Patentblatt 84/40

(84) Benannte Vertragsstaaten:
AT BE CH DE FR GB IT LI NL SE

(71) Anmelder: Gesellschaft für digitale Automation mbH
Lützelsteiner Strasse 1
D-8000 München 45(DE)

(72) Erfinder: Peyr, Franz
Dom-Pedro-Strasse 6
D-8000 München 19(DE)

(74) Vertreter: Goddar, Heinz J., Dr. et al,
FORRESTER & BOEHMERT Widenmayerstrasse 4/I
D-8000 München 22(DE)

(54) Verfahren zum Betreiben eines Industrieroboters in roboterkinematikfremden Koordinaten.

(57) Verfahren zum Betreiben eines Industrieroboters mit Bilden der Differenz des Ausgangssignals eines in roboterkinematikfremden Koordinaten arbeitenden Echtzeit-Weg-Profil-Generators (2) mit einem in roboterkinematikfremden Koordinaten angegebenen Positions-Ist-Signal, Bilden der Sunne (3) des derart gebildeten, in roboterkinematikfremden Koordinaten angegebenen Positions-Fehler-Signals mit dem Ausganssignal des Profilgenerators (2), Transformieren (4) des derart gebildeten, in roboterkinematikfremden Koordinaten angegebenen Positions-Stell-Signals in Roboterkoordinaten, Wandeln (5) des in Roboterkoordinaten angegebenen Positions-Stell-Signals in ein Geschwindigkeits-Soll-Signal, Bilden der Differenz des Geschwindig-keits-Soll-Signals mit einem mittels eines Tachogenerators (10) ermittelten Geschwindigkeits-Ist-Signals (6), Bilden der Differenz aus dem derart geschaffenen Momenten-Soll-Signal mit einem Momenten-Ist-Signal (7), Ausgeben des derart gebildeten Momenten-Stell-Signals auf einen die Energiezufuhr eines Antriebs (9) steuernden Leistungsschalters (8), und Rücktransformieren (12) des von einem Positionsgeber (11) in Roboterkoordinaten erhaltenen Positions-Ist-Signals in roboterkinematikfremden Koordinaten.

./...

0120198

Gda Gesellschaft für digitale Automation mbH,
Lützelsteiner Str. 1, 8000 München 45

---------------------------------------------------------

Verfahren zum Betreiben eines Industrieroboters in roboterkinematikfremden Koordinaten

---------------------------------------------------------

Die Erfindung betrifft ein Verfahren zum Betreiben eines
Industrieroboters in roboterkinematikfremden Koordinaten.

Industrieroboter, also in mehreren Bewegungsachsen frei
programmierbaren Handhabungsgeräte, die aufgrund ihrer
Anpassungsfähigkeit in einer Fertigung die unterschiedlichsten Aufgaben übernehmen können, gewinnen zunehmend
hauptsächlich an solchen Arbeitsplätzen Anwendung, die
durch Monotonie, Lärm, Schmutz, Erschütterung, Hitze
usw. gekennzeichnet sind.

Industrieroboter bestehen im allgemeinen aus dem Baugruppenantrieb, Steuerung, Kinematik, Antriebe, Greifer
und evt. Sensoren. Dabei erfolgt der Antrieb durch elektrische, hydraulische, pneumatische Systeme oder Kombinationen hiervon. Unterschieden werden die Steuerungsprinzipien der Punktsteuerung PTP(= point to point) die
sich besonders dann eignet, wenn häufig ein definierter
Punkt auf einer beliebigen Bahn angefahren werden soll,
und die Bahnsteuerung CP(= continious paths), welche das
Einhalten eines bestimmten Bewegungsablaufs, der durch
ein numerisch vorgegebenes Funktionsverhalten repetierbar ist, wie dies etwa bei dem Bahnschweißen erforderlich ist, erlaubt.

Während häufig das Programmieren der Steuerung des Industrieroboters vorort durch Anfahren und Abspeichern, dem
sogenannten Teach-In-Verfahren erfolgt, finden zunehmend
auch Industrieroboter Verwendung, bei denen der Bewegungsablauf des Industrieroboters in roboterkinematikfremden Koordinaten, insbesondere also in kartesischen
Koordinaten, vorgegeben wird und mittels eines Profilgenerators in Echtzeit ausgegeben und nach Transformation
in Roboterkoordinaten einem unterlagerten Regelkreis
zugeführt wird, welcher mittels Hilfsregelkreisen wie
einem Momenten-Regelkreis, einem Geschwindigkeits-Regelkreis und einem Positions-Regelkreis das Abfahren des
vorgegebenen Weges bei deffinierter Vektorgeschwindigkeit bewirkt. Dabei arbeiten bei den bekannten Industrierobotern diese Hilfsregelkreise in sogenannten
Roboterkoordinaten, also unabhängig von dem kartesischen
Koordinatensystem.

Es ist daher bei den bekannten Industrierobotern erforderlich, daß die Transformation des in kartesischen Koordinaten vorgegebenen Weg-Soll-Werts in die für die Regelkreise erforderlichen Roboterkoordinaten in Echtzeit erfolgen. Dabei ist eine hohe numerische Genauigkeit erforderlich, um die Summe der Systemtoleranz, welche aus der Summe aller Teiltoleranzen besteht, so gering wie möglich zu halten, was wegen des Echtzeiterfordernisses einen hohen Rechneraufwand voraussetzt.

Der Erfindung liegt die Aufgabe zugrunde, ein Verfahren zum Betreiben eines Industrieroboters zu schaffen, bei dem die Positions-Regelung nicht in Roboterkoordinaten, sondern in roboterkinematikfremden, vorzugsweise in kartesischen, Koordinaten durchgeführt wird, so daß die Transformation der roboterkinematikfremden, insbesondere also kartesischen Koordinaten in Roboterkoordinaten nicht mit hoher numerischer Genauigkeit in Echtzeit zu erfolgen braucht, wobei die Toleranzen der Prozeßelemente, wie Koordinatentransformator, Hilfsregelkreise, Stellelemente, Meßelemente durch die Regelung in kartesischen Koordinaten kompensiert und damit eliminiert werden.

Erfindungsgemäß wird diese Aufgabe gelöst durch Bilden der Differenz des Ausgangssignals eines in roboterkinematikfremden Koordinaten arbeitenden Echtzeit-Weg-Profil-Generators mit einem in roboterkinematikfremden Koordinaten angegebenen Positions-Ist-Signal, Bilden der Summe des derart gebildeten, in in roboterkinematikfremden Koordinaten angegebenen Positions-Fehler-Signals mit dem Ausgangssignal des Profilgenerators, Transformieren des derart gebildeten, in roboterkinematikfremden Koordinaten angegebenen Positions-Stell-Signals in Roboterkoordinaten, Wandeln des in Roboterkoordinaten angegebenen Positions-Stell-Signals in ein Geschwindig-keits-Soll-Signal, Bilden der Differenz des Geschwindig-keits-Soll-Signals mit einem mittels eines Tachogenerators ermittelten Geschwindigkeits-Ist-Signals, Bilden der Differenz aus dem derart geschaffenen Momenten-Soll-Signal mit einem Momenten-Ist-Signal, Ausgeben des derart gebildeten Momenten-Stell-Signals auf einen die Energiezufuhr eines Antriebs steuernden Leistungsschalters, und Rücktransformieren des von einem Positionsgeber in Roboterkoordinaten erhaltenen Positions-Ist-Signals in roboterkinematikfremde Koordinaten.

Eine bevorzugte Ausgestaltung ist dadurch gekennzeich-net, daß bei Bilden der Differenz des in roboterkoor-dinatenfremden, insbesondere also kartesischen Koordi-naten arbeitenden Echtzeit-Weg-Profilgenerators mit den in roboterkoordinatenfremden Koordinaten rückgewandelten angegebenen Positions-Ist-Signals weiter ein in roboterkoordinatenfremden Koordinaten angegebener Zusatz-Soll-Wert berücksichtigt wird.

Bei dieser bevorzugten Ausgestaltung ist vorteilhaft, daß eine Anpassungs des Bewegungsablaufs (etwa wegen einer etwas geänderten Aufgabenstellung, oder aber wegen eines Fehlers im Prozeß), durch einfaches Eingeben eines Zusatzsollwerts, beispielsweise durch Sensoren, in roboterkoordinatenfremden, insbesondere also kartesischen Koordinaten erreicht werden kann.

Weitere Merkmale und Vorteile der Erfindung ergeben sich aus den Ansprüchen, der Beschreibung und der ein Ausführungsbeispiel des erfindungsgemäßen Verfahrens skizzierenden Darstellung.

Mittels eines Interpolators 1 und eines Profilgenerators 2 wird unter Echtzeitbedingung ein Wegsollprofil "S-Soll" in kartesischen Koordinaten generiert. Dabei kann der Profilgenerator als Bedienereingabe oder aber auch als Bewegungskalkulator dargestellt sein. Das generierte Wegprofil wird einem Regler 3 zugeführt, an dem der Vergleich des Positions-Soll-Signals mit dem Positions-Ist-Signal durchgeführt wird. Das in kartesischen Koordinaten vom Regler erzeugte Fehlersignal $\varepsilon_1$ wird dem ebenfalls in kartesischen Koordinaten vorliegenden Positions-Soll-Singal des Profilgenerators aufaddiert. Die so erhaltene Stellgröße wird in dem Koordinaten-Transformator 4 in Roboterkoordinaten umgesetzt. Sodann werden die Roboterpositionen nach in Positionsregelkreisen bekannten Verfahren in die Geschwindigkeitssignale in einem Baustein 5 umgesetzt. Nach Ausgabe dieses Signals, oder Wandlung dieses digitalen Signals in ein Analogsignal wird das so erzeugte Geschwindigkeits-Soll-Signal "V-Soll" einem Hilfsregler 6 zugeführt, der das Geschwindigkeits-Soll-Signal mit dem Geschwindigkeits-Ist-Signal "V-Ist" vergleicht und den Geschwindigkeits-Stell-Wert $\varepsilon_2$ als Momenten-Soll-Wert einem weiteren Hilfs-Regler 7 zuführt, der diesen Momenten-Soll-Wert "M-Soll" wiederrum mit einem Momenten-Ist-Wert "M-Ist" vergleicht und den Momenten-Stell-Wert $\varepsilon_3$ einem Leistungs-Schalter 8 zuführt, der den Motor 9 steuert. Der Motor 9 ist mit einem Geschwindigkeitsgeber 10, der den Geschwindigkeits-Ist-Wert dem Regler 6 zuführt, sowie einem Positions-Wert-Geber 11 versehen, der die Positions-Ist-Werte in Roboterkoordinaten dem Koordinatentransformator 12 zuführt. In dem Koordinaten-Transformator 12 werden die Roboterkoordinaten des Positions-Ist-Gebers 11 in kartesischen Koordinaten umgewandelt. Die in kartesischen Koordinaten vorliegenden Positions-Ist-Werte, werden sodann dem Regler 3 zugeführt und damit die Fehler der unterlagerten Hilfselemente kompensiert.

Die Darstellung macht weiter deutlich, daß dem Regler 3 weiter ein Zusatzsollwert eingegeben werden kann. Dieser Zusatzsollwert kann entweder manuell eingegeben werden, etwa bei Beobachtung einer Abweichung, der hier ggf. einzugebende Zusatzsollwert kann jedoch auch aufgrund einer im kartesischen Koordinatensystem festgestellten Abweichung des von dem Industrieroboter tatsächlich erreichten Ortes gegenüber dem gewünschten Ort eingegeben werden.

Durch das erfindungsgemäße Verfahren wird es auf diese Weise möglich, eine visuell oder mittels eines anderen Sensors festgestellte Abweichung des von dem Industrieroboter anzusteuernden Ort von dem gewünschten Ort manuell oder aber automatisch durch einfache Vorgabe des absoluten Fehlwertes zu korrigieren.

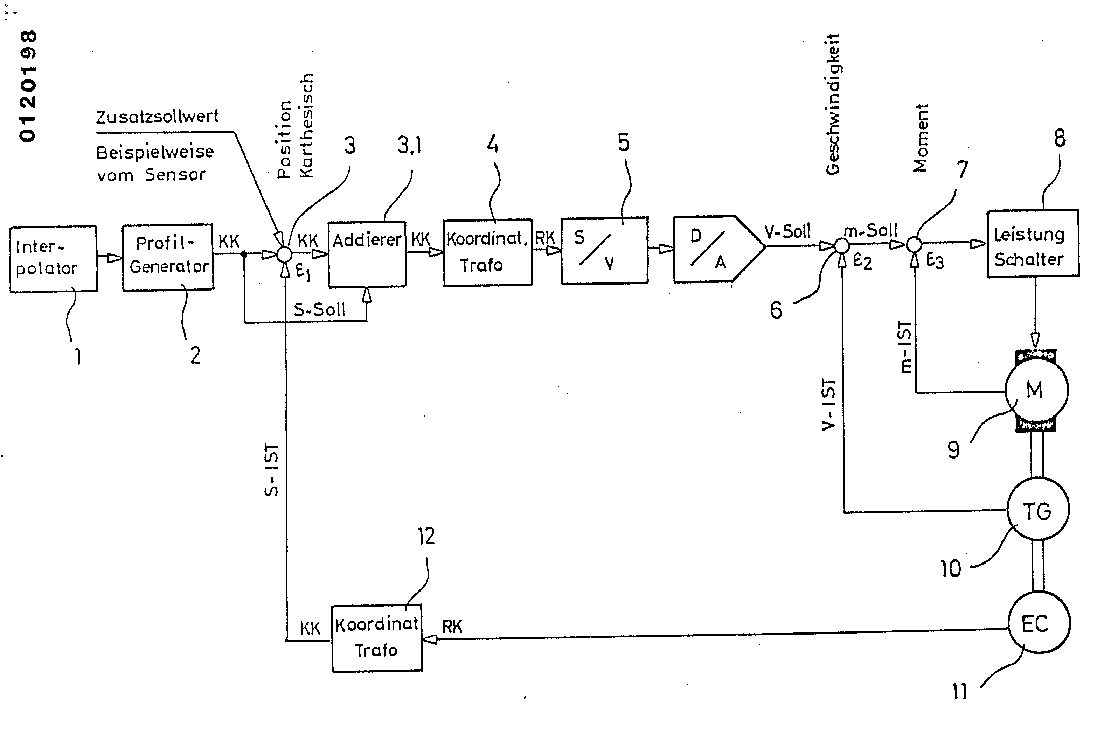

Die in der vorstehenden Beschreibung, den Ansprüchen und der Zeichnung offenbarten Merkmale der Erfindung können sowohl einzeln als auch in beliebiger Kombination für die Ausführung der Erfindung in ihren verschiedenen Ausgestaltungen wesentlich sein.

0120198

Bezugszeichenliste

=================

| 1 | Interpolator | 1 |
| 2 | Profilgenerator | 2 |
| 3 | Regler | 3 |
| 3.1 | Addierer | 3.1 |
| 4 | Koordinatentransformator | 4 |
| 5 | Baustein | 4 |
| 6 | Hilfsregler | 6 |
| 7 | Hilfsregler | 7 |
| 8 | Leistungsschalter | 8 |
| 9 | Antrieb | 9 |
| 10 | Geschwindigkeitsgeber | 0 |
| 11 | Positionsgeber | 1 |
| 12 | Koordinatentransformator | 12 |

A n s p r ü c h e
=================

1. Verfahren zum Betreiben eines Industrieroboters in roboterkinematikfremden Koordinaten, gekennzeichnet durch

Bilden der Differenz des Ausgangssignals eines in roboterkinematikfremden Koordinaten arbeitenden Echtzeit-Weg-Profil-Generators mit einem in roboterkinematikfremden Koordinaten angegebenen Positions-Ist-Signal,

Bilden der Summe des derart gebildeten, in roboterkinematikfremden Koordinaten angegebenen Positions-Fehler-Signals mit dem Ausgangssignal des Profilgenerators,

Transformieren des derart gebildeten, in roboterkinematikfremden Koordinaten angegebenen Positions-Stell-Signals in Roboterkoordinaten,

Wandeln des in Roboterkoordinaten angegebenen Positions-Stell-Signals in ein Geschwindigkeits-Soll-Signal,

Bilden der Differenz des Geschwindigkeits-Soll-Signals mit einem mittels eines Tachogenerators ermittelten Geschwindigkeits-Ist-Signals,

Bilden der Differenz aus dem derart geschaffenen Momenten-Soll-Signal mit einem Momenten-Ist-Signal,

Ausgeben des derart gebildeten Momenten-Stell-Signals auf einen die Energiezufuhr eines Antriebs steuernden Leistungsschalters, und

Rücktransformieren des von einem Positionsgeber in Roboterkoordinaten erhaltenen Positions-Ist-Signals in roboterkinematikfremde Koordinaten.

2. Verfahren zum Betreiben eines Industrieroboters nach Anspruch 1, dadurch gekennzeichnet, daß bei Bilden der Differenz des in kartesischen Koordinaten arbeitenden Echtzeit-Weg-Profilgenerators mit den in kartesischen Koordinaten angegebenen Positions-Ist-Signals weiter ein in kartesischen Koordinaten angegebener Zusatz-Soll-Wert berücksichtigt wird.

Inter-polator 1

Profil-Generator 2

Zusatzsollwert

Beispielweise vom Sensor

KK

S-IST

ε₁ KK

Position Karthesisch 3

S-Soll

Addierer KK 3.1

Koordinat. Trafo RK 4

S / V 5

D / A

V-Soll

Geschwindigkeit 6

V-IST

ε₂ m-Soll

m-IST

ε₃ Moment 7

Leistung Schalter 8

Koordinat Trafo 12

KK

RK

EC 11

TG 10

M 9

**0120198**
Nummer der Anmeldung

Europäisches
Patentamt

## EUROPÄISCHER RECHERCHENBERICHT

| EINSCHLÄGIGE DOKUMENTE | | | EP 84100475.7 |
|---|---|---|---|
| **Kategorie** | Kennzeichnung des Dokuments mit Angabe, soweit erforderlich, der maßgeblichen Teile | Betrifft Anspruch | KLASSIFIKATION DER ANMELDUNG (Int. Cl. ³) |
| A | <u>DE - A1 - 2 806 127</u> (H.A. SCHLATTER) <br><br> * Fig. 1; Seite 7, Zeile 8 - Seite 8, Zeile 27 * <br><br> -- | 1 | B 25 J 13/00 <br> B 25 J  9/00 |
| A | <u>DE - A1 - 3 046 897</u> (HITACHI) <br><br> * Fig. 13, Blöcke 89, 91 * <br><br> ---- | 1 | |

RECHERCHIERTE
SACHGEBIETE (Int. Cl. ³)

B 25 J  9/00
B 25 J 13/00
B 65 G 47/00
G 05 D  3/00
G 05 B 19/00

Der vorliegende Recherchenbericht wurde für alle Patentansprüche erstellt.

| Recherchenort | Abschlußdatum der Recherche | Prüfer |
|---|---|---|
| WIEN | 04-06-1984 | DRÖSCHER |

KATEGORIE DER GENANNTEN DOKUMENTEN
X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder
    nach dem Anmeldedatum veröffentlicht worden ist
D : in der Anmeldung angeführtes Dokument
L : aus andern Gründen angeführtes Dokument

& : Mitglied der gleichen Patentfamilie, überein-
    stimmendes Dokument

EPA Form 1503 03 82